(19)

Europäisches
Patentamt
European
Patent Office
Office européen
des brevets

(11) **EP 1 990 125 B1**

(12) **EUROPEAN PATENT SPECIFICATION**

(45) Date of publication and mention
of the grant of the patent:
**12.10.2011 Bulletin 2011/41**

(51) Int Cl.:
***B23K 26/36*** *(2006.01)*   ***C03C 15/00*** *(2006.01)*
***C03C 23/00*** *(2006.01)*   ***H01S 3/00*** *(2006.01)*

(21) Application number: **06714314.9**

(22) Date of filing: **22.02.2006**

(86) International application number:
**PCT/JP2006/303174**

(87) International publication number:
**WO 2007/096958 (30.08.2007 Gazette 2007/35)**

(54) **GLASS PROCESSING METHOD USING LASER**

GLASBEARBEITUNGSVERFAHREN MIT LASER

PROCÉDÉ DE TRAITEMENT DE VERRE UTILISANT UN LASER

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**12.11.2008 Bulletin 2008/46**

(73) Proprietor: **Nippon Sheet Glass Company, Limited
Tokyo 108-6321 (JP)**

(72) Inventors:
• **KOYO, Hirotaka
Minato-ku, Tokyo 108-6321 (JP)**

• **TSUNETOMO, Keiji
Tokyo 108-6321 (JP)**
• **SHOJIYA, Masanori
Tokyo 108-6321 (JP)**

(74) Representative: **Intès, Didier Gérard André et al
Cabinet Beau de Loménie
158, rue de l'Université
75340 Paris Cedex 07 (FR)**

(56) References cited:
**JP-A- 06 218 563      JP-A- 09 309 744
JP-A- 2003 307 645    US-A- 5 374 291
US-A- 5 919 607        US-A1- 2001 028 385
US-A1- 2003 045 420  US-A1- 2004 199 150**

EP 1 990 125 B1

**Description**

The present invention relates to a method of processing glass using a laser according to the preamble of claim 1 (see, for example, US 5 374 291).

Background Art

Methods have been proposed for using a laser to form micro through-holes in glass. For example, JP2000-61667A discloses a method for forming holes in glass by irradiation with the fundamental wave (1064 nm) of a Nd:YAG laser. JP13(2001)-105398A discloses a method that processes a substrate by etching, after altering portions of the substrate and forming microholes by irradiation of the altered portions with a laser beam. JP2001-105398A also discloses a method for forming microholes by first irradiating portions of a photosensitive glass plate with ultraviolet light to cause alteration and then irradiating the altered portions with a YAG laser.

Methods that process glass using a ultrashort pulsed-laser also are disclosed (JP2004-351494A, JP16(2004)-359475A). The processing methods disclosed in these publications use the femtosecond laser as the ultrashort pulsed-laser.

In the Nd:YAG laser, however, the fundamental wave cannot easily condense into a small spot. It is accordingly difficult to form fine holes by irradiation with the Nd:YAG laser. Further, the shape of the holes formed in the glass by the laser irradiation cannot be controlled easily with good reproducibility.

The method disclosed in JP2001-105398A has a problem in that it limits the type of substrate that can be used in actual practice. Another problem is that the method involves complicated steps. The method using the femtosecond laser has a problem in that it requires an expensive processing device.

Patent application US 2001/0028385 discloses a method for making marks on a transparent substrate using a laser beam focused on the inner portion of the substrate, using an fθ lens.

Patent US 5,374,291 discloses a method of processing a photosensitive glass by exposing it to radiation from a laser whose oscillation wavelength lies within the range of wavelengths of exposing light to which the glass responds, then thermally processing the glass, then etching the glass.

Disclosure of the Invention

Under these circumstances, it is an object of the present invention to provide a processing method capable of forming microholes or grooves in glass both easily and inexpensively, and a processing device therefor.

It has been believed that processing of glass other than photosensitive glass requires either irradiation with an ultrashort pulsed-laser such as the femtosecond laser, or concentration of energy in the vicinity of the focal point using a lens having a large numerical aperture (for example, NA = 0.8). As a result of intensive studies, the inventors of the present invention found, for the first time, that processing of glass other than photosensitive glass can be performed easily by condensing predetermined laser light using a predetermined lens. In the past, the processing of glass other than photosensitive glass by a method as proposed in the present invention has been considered difficult. The examination by the inventors of the present invention revealed the effectiveness of the method for the first time.

Specifically, a method of the present invention is defined in claim 1. The latter includes the steps of: (i) condensing a laser pulse of a wavelength λ through a lens to irradiate glass and form an altered portion in a portion of the glass irradiated with the laser pulse; and (ii) etching the altered portion using an etchant having a greater etching rate for the altered portion than for the glass, the laser pulse having a pulse width ranging from 1 ns to 200 ns, the wavelength λ being 535 nm or less, the glass having an absorption coefficient of 50 cm$^{-1}$ or less at the wavelength λ, and the lens having a focal length L (mm) that produces a value of 7 or greater when divided by a beam diameter D (mm) of the laser pulse incident on the lens, the glass being substantially free from gold and silver and the cultered poil being formed by single irradiation with the layer pulse.

In a method of the present invention, a predetermined laser pulsed having a wavelength of 535 nm or less is condensed through a predetermined lens, and glass having a predetermined absorption coefficient is irradiated with the laser pulse to form an altered portion. The glass then is processed by etching the altered portion. A method of the present invention can use the harmonic of a Nd:YAG laser, and therefore allows the glass to be processed using an inexpensive device, compared with traditional methods using the femtosecond laser. Further, a method of the present invention can suppress glass deformation (such as generation of debris or cracking) in portions of the glass subjected to the process, and forms more uniformly shaped holes compared with traditional methods that process glass solely by irradiation with a laser pulse.

Further, in a processing method of the present invention, the L/D ratio of focal length L to beam diameter D is set to a value equal to or less than a predetermined value, so as to prevent concentration of the laser beam near the focal point. Thus, with a method of the present invention, a relatively long altered portion can be formed by a single irradiation with a pulse, compared with traditional methods in which a lens having a relatively large numerical aperture (for example, NA = 0.8 or greater) is used to concentrate energy near the focal point and form an altered portion. It is therefore possible also to form, according to the present invention, through-holes only by a single pulse irradiation and etching.

Further, with a method of the present invention, the size of the hole can be varied with ease by changing the conditions of forming the altered portion and the etching conditions. A method of the present invention also allows for formation of large numbers of altered portions at once, by moving a spot of a high repetition pulsed laser at high speed, using a galvano scanner. That is, a method of the present invention can form large numbers of holes in a short period of time.

Brief Description of the Drawings

FIG. 1A and FIG. 1B are cross sectional views showing an example of a processing method of the present invention.
FIG. 2A through FIG. 2D are cross sectional views showing another example of a processing method of the present invention.
FIG. 3A and FIG. 3B are cross sectional views showing yet another example of a processing method of the present invention.
FIG. 4A through FIG. 4C are cross sectional views showing still another example of a processing method of the present invention.
FIG. 5A through FIG. 5D are top views and cross sectional views showing still another example of a processing method of the present invention.
FIG. 6 is a diagram schematically showing an exemplary configuration of a processing device not covered by the present invention.
FIG. 7 is a light micrograph showing an example of a hole formed by a processing method of the present invention.
FIG. 8 is an electron scanning micrograph showing an example of a groove formed by a processing method of the present invention.

Best Mode for Carrying Out the Invention

The following will describe an embodiment of the present invention.

[Glass Processing Method]

A glass processing method of the present invention includes the steps below. In step (i), a laser pulse with wavelength $\lambda$ is condensed through a lens to irradiate glass and form an altered portion in a portion of the glass irradiated with the laser pulse.

The laser pulse has a pulse width ranging from 1 ns (nanosecond) to 200 ns, preferably from 1 ns to 100 ns, and, for example, 5 ns to 50 ns. A pulse width below 1 ns requires an expensive processing device. A pulse width above 200 ns lowers the peak-to-peak value of the laser pulse, which leads to difficulties in processing.

The wavelength $\lambda$ of the laser pulse is 535 nm or less, preferably 360 nm or less, and, for example, 350 nm to 360 nm. A laser pulse with a wavelength of 535 nm or less easily can be obtained using the harmonic of a Nd:YAG laser, a Nd:YVO$_4$ laser, or a Nd:YLF laser. A laser pulse with a wavelength above 535 nm increases the irradiation spot, which causes problems such as difficulty forming microholes and susceptibility to cracking around the irradiation spot due to heat.

The energy of the laser pulse is selected suitably according to the material of the glass, or the form of the altered portion. As one example, the energy of the laser pulse ranges from 5 $\mu$J/pulse to 100 $\mu$J/pulse. In a method of the present invention, the energy of the laser pulse can be increased to bring about a proportional increase in the length of the altered portion. The value of M$^2$, which indicates a beam quality of the laser pulse, may be 2 or less, for example. A laser pulse with an M$^2$ value of 2 or less allows for easy formation of micropores or microgrooves.

The absorption coefficient of the glass at the wavelength $\lambda$ is 50 cm$^{-1}$ or less, and, for example, 0.1 cm$^{-1}$ to 20 cm$^{-1}$. When the absorption coefficient is above 50 cm$^{-1}$, the energy of the laser beam is absorbed in the vicinity of the glass surface, which makes it difficult to form the altered portion inside the glass. It should be noted, however, that formation of the altered portion inside the glass is possible with an absorption coefficient of less than 0.1 cm$^{-1}$, as will be described later in Examples.

A glass having an absorption coefficient of 50 cm$^{-1}$ or less at the wavelength $\lambda$ can be selected from known glasses, for example, such as those described in the Examples. The shape of the glass is not limited, and a glass plate can be used for example. A processing method of the present invention does not require use of photosensitive glass and allows for processing of a wide range of glasses. According to the present invention, the processing method enables processing of glass substantially free from gold or silver.

The absorption coefficient is calculated by measuring the transmittance and reflectance of a sample having a thickness d (for example, about 0.1 cm). First, using a sample with a thickness d (cm), transmittance T (%) and reflectance R (%) at an incident angle of 12° are measured. The transmittance and reflectance are measured using a spectrophotometer, Type UV-3100 available from Shimadzu Corporation. From the measured values, absorption coefficient $\alpha$ is calculated according to the following equation.

$$\alpha = \ln((100\text{-}R)/T)/d$$

The focal length L (mm) of the lens is, for example, 50 mm to 500 mm, and may be selected from a range of 100 mm to 200 mm.

The beam diameter D (mm) of the laser pulse is, for example, 1 mm to 40 mm, and may be selected from a range of 3 mm to 20 mm. As used herein, the beam diameter D is the beam diameter of a laser pulse incident on the lens. The beam diameter D means a diameter of the area having the intensity [1/e] times the intensity at the center of the beam.

In a processing method of the present invention, the value obtained by dividing the focal length L by the beam diameter D (the quotient of L/D) is 7 or greater, preferably 7 or greater to 40 or less (for example, 8.3 or greater to 40 or less), and, for example, 10 or greater to 25 or less. This value relates to a condensing property of the laser beam with which the glass is irradiated. Smaller L/D means that local laser condensation will occur and that formation of a uniform, long altered portion will be difficult. When L/D is less than 7, the laser power will be too strong in the vicinity of the beam waist and cracking will occur easily in side the glass.

A processing method of the present invention does not require a pretreatment for the glass before irradiation with the laser pulse. For example, formation of a film promoting absorption of the laser pulse is not required. Nevertheless, such processes may be performed as long as the effects of the present invention are obtained.

In a portion irradiated with the laser pulse, an altered portion is formed that differs from the non-irradiated portion of the glass. Generally, the altered portion can be distinguished from the other portions by observation with a light microscope.

In traditional processing methods using the femtosecond laser, the altered portion is formed by scanning a laser beam in the depth direction with overlapping irradiation pulses. In contrast, a method of the present invention allows the altered portion to be formed by a single irradiation with a pulse. In other words, a method of the present invention allows for formation of the altered portion without shining the laser pulse over the same point. Note, however, that the laser pulse also may be shone to overlap.

In step (i), the laser pulse generally is condensed through the lens to focus within the glass. When forming a through-hole in a glass plate, the laser pulse generally is condensed to focus in the vicinity of the center of the glass plate with respect to the direction of thickness. When processing only the top surface side (laser pulse incident side) of the glass plate, the laser pulse generally is condensed to focus on the top surface side of the glass plate. Conversely, when processing only the back surface side (opposite side of the laser pulse incident side) of the glass plate, the laser pulse generally is condensed to focus on the back surface side of the glass plate. However, the laser pulse may be focused outside the glass as long as the altered portion is formed in the glass. For example, the laser pulse may be focused at a position away from the back surface of the glass plate by a predetermined distance (for example, at most 1.0 mm). In other words, so long as the altered portion is formed in the glass, the laser pulse may be focused inside the glass, or at a position within a 1.0 mm distance (including a position on the back surface of the glass) from and behind the back surface of the glass (with respect to the direction of propagation of the laser pulse passing through the glass).

The size of the altered portion formed in step (i) varies depending on such factors as the beam diameter D of the laser beam incident on the lens, the focal length L of the lens, the absorption coefficient of the glass, and the power of the laser pulse. With a processing method of the present invention, a cylindrical altered portion measuring 10 $\mu$m or less in diameter and 100 $\mu$m or more in length can be formed, for example.

An example of the conditions selected in step (i) is shown in Table 1 below. In the conditions given in Table 1, L and D are selected so that $7 \leq L/D$.

[Table 1]

| Conditions | | Range |
|---|---|---|
| Absorption coefficient of glass (cm$^{-1}$) | | 0.1 to 20 |
| Laser pulse | Pulse width (ns) | 5 to 50 |
| | Wavelength ($\mu$m) | 350 to 360 |
| | Beam diameter D (mm) | 3 to 20 |
| | Energy ($\mu$J/pulse) | 5 to 100 |
| Focal length L of lens (mm) | | 100 to 200 |

In step (ii), the altered portion is etched using an etchant having a greater etching rate for the altered portion than for the glass. As such an etchant, hydrofluoric acid (an aqueous solution of hydrogen fluoride (HF)) may be used, for example. Further, the etchant may be sulfuric acid ($H_2SO_4$) or an aqueous solution thereof, nitric acid ($HNO_3$) or an aqueous solution thereof, or hydrochloric acid (an aqueous solution of hydrogen chloride (HCl)) may be used. A mixture of these acids also may be used. When hydrofluoric acid is used, the etching of the altered portion can proceed faster and the holes can be formed in a short time period. When sulfuric acid is used, portions of the glass other than the altered portion are less likely to be etched, and straight holes with a small taper angle can be formed.

The etching time and etchant temperature are selected according to the shape of the altered portion and the intended form of the product glass. The speed of etching can be increased by increasing the etching temperature. The hole diameter can be controlled according to the etching conditions.

When the altered portion is formed to become exposed only on the side of the top surface of the glass plate, etching can form a hole only on the side of the top surface of the glass plate. Conversely, when the altered portion is formed to become exposed only on the side of the back surface of the glass plate, etching can form a hole only on the side of the back surface of the glass plate. When the altered portion is formed to become exposed on the top and back surface sides of the glass plate, a through-hole can be formed by etching the glass plate from the both sides. Note that, a film that prevents etching may be formed over the top surface or back surface of the glass plate so that etching occurs only on one side of the glass plate. Further, etching may be performed after polishing the glass plate and exposing the altered portion which has been formed not to become exposed on the surface of the glass plate. By varying the conditions of forming the altered portion and the etching conditions, various forms of holes can be formed, such as cylindrical through-holes, hand drum-shaped (hourglass) through-holes, truncated conical through-holes, conical holes, truncated conical holes, and cylindrical holes.

A plurality of holes may be formed that join together to form a groove. In this case, a plurality of laser pulses is shone along a line to form a linear array of altered portions. The altered portions then are etched to form a groove. Here, it is not necessarily required that the laser pulses are shone to overlap, as long as adjacent holes join together by etching after the formation.

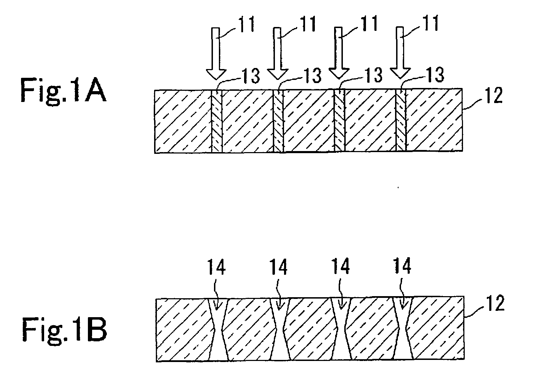

FIG. 1A through FIG. 5D schematically illustrate five examples of the steps of processing a glass plate according to a processing method of the present invention. In a first processing method, as shown in FIG. 1A, laser pulses 11 are shone to form altered portions 13 extending through a glass plate 12. The glass plate 12 is then etched from both sides to form hand drum-like through-holes 14. The through-holes 14 have the shape of two truncated conical holes joined together.

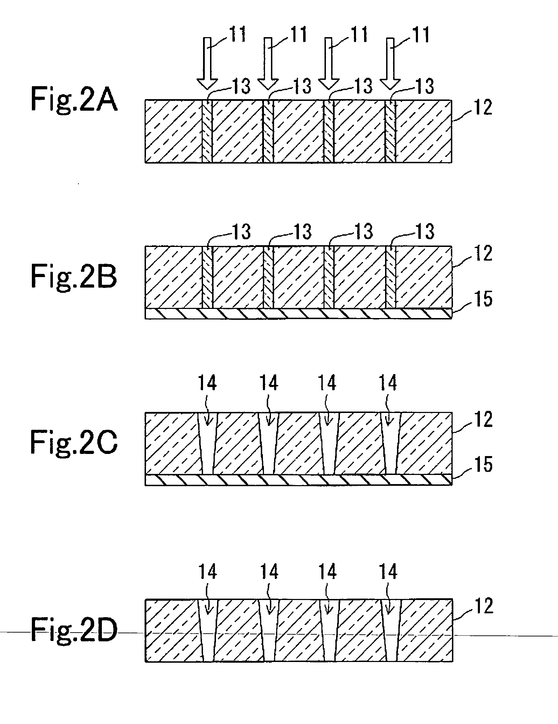

In a second processing method, as shown in FIG. 2A, the laser pulses 11 are shone to form altered portions 13 extending through the glass plate 12. Then, as shown in FIG. 2B, one side of the glass plate 12 is covered with a protective film 15. Thereafter, etching is performed from the surface not covered with the protective film 15, so as to form truncated conical through-holes 14 passing through the glass plate 12, as shown in FIG. 2C. The protective film 15 then is removed to expose the through-holes 14 on the both sides of the glass plate 12, as shown in FIG. 2D.

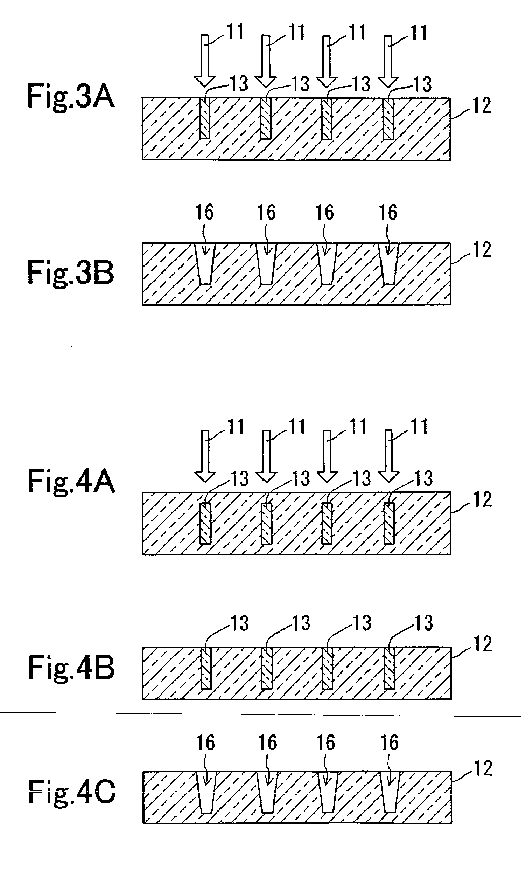

In a third processing method, as shown in FIG. 3A, the laser pulses 11 are shone to form altered portions 13 on the top surface side of the glass plate 12. The altered portions 13 are formed to extend from the top surface of the glass plate 12 into the glass plate 12. The altered portions 13 are then removed by etching to form truncated conical holes 16, as shown in FIG. 3B.

In a fourth processing method, as shown in FIG. 4A, the laser pulses 11 are shone to form altered portions 13 inside the glass plate 12. Then, one surface or the both surfaces of the glass plate 12 are polished to expose the altered portions 13 on the polished surface or surfaces. The altered portions 13 so exposed are then removed by etching to form holes. In the example shown in FIG. 4B and FIG. 4C, only one of the surfaces of the glass plate 12 is polished to expose the altered portions 13 and form truncated conical holes 16.

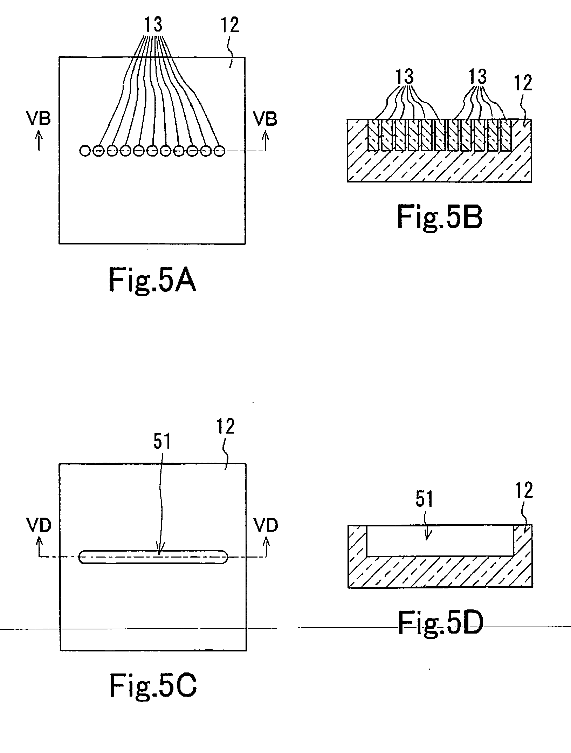

FIG. 5A through FIG. 5D show a fifth processing method. FIG. 5A and FIG. 5C are top views. FIG. 5B and FIG.

5D are cross sectional views. First, as shown in FIG. 5A and FIG. 5B, a plurality of laser pulses is shone along a line on the glass plate 12 to form a linear array of altered portions 13. Here, when the laser pulses are continuously shone to overlap, excessive heat may occur at the irradiated portion and this may cause cracking in the glass. Such cracking can be avoided by shining the laser pulses in a non-overlapping manner, for example.

Then, the altered portions 13 are removed by etching. Because etching removes an area wider than the altered portions 13, the holes formed by the etching of the altered portions 13 join together. As a result, a groove 51 is formed, as shown in FIG. 5C and FIG. 5D. The surface of the glass plate 12 may be polished before etching. In the example shown in FIG. 5A through FIG. 5D, a linear groove is formed. However, a groove of any shape can be formed by varying the arrangement of the altered portions.

In a processing method of the present invention, the laser pulse may be the harmonic of a Nd:YAG laser, a Nd:YVO$_4$ laser, or a Nd:YLF laser. As used herein, the harmonic refers to the second harmonic wave, the third harmonic wave, or the fourth harmonic wave, for example. The second, the third, and the fourth harmonic waves of the laser have wavelengths ranging from about 532 to 535 nm, about 355 to 357 nm, and about 266 to 268 nm, respectively. Use of such lasers enables processing of the glass at low cost.

[Processing Device]

A processing device is a device for performing the step (i) of a processing method of the present invention. Specifically, the processing device is a device that processes glass by irradiation with a laser beam.

The processing device includes a light source that emits a laser pulse having a pulse width of 1 ns to 200 ns and a wavelength $\lambda$. The processing device also includes a lens through which the laser pulse is condensed to irradiate the glass being processed. The wavelength $\lambda$ of the laser pulse is 535 nm or less. The lens has a focal length L (mm) that produces a value of 7 or greater when divided by a beam diameter D (mm) of the laser pulse incident on the lens. The absorption coefficient of the processed glass at wavelength $\lambda$ is 50 cm$^{-1}$ or less.

The light source that emits the laser pulse is not particularly limited. For example, the light source exemplified in conjunction with the glass processing method can be used. A known lens can be used for the lens.

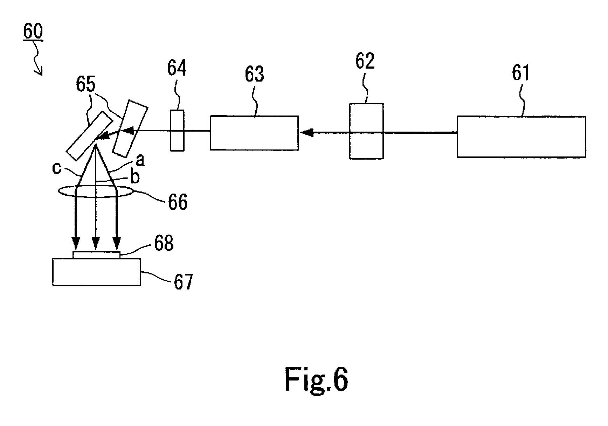

An exemplary configuration of a processing device of the present invention is illustrated schematically in FIG. 6. A processing device 60 shown in FIG. 6 includes a laser unit 61, an attenuator 62, a beam expander 63, an iris 64, a galvano mirror 65, an fθ lens 66, and a stage 67. Known optical elements can be used for these optical elements. The beam diameter D of the beam incident on the lens is adjustable with the use of the laser unit 61, the beam expander 63, and the iris 64.

The laser pulse emitted by the laser unit 61 is attenuated by the attenuator 62, expanded by the beam expander 63, and narrowed by the iris 64 before entering the galvano mirror 65. The galvano mirror 65 adjusts the optical axis of the laser pulse, which then enters the fθ lens 66. With the galvano mirror, the position of the irradiated laser beam can be moved at a rapid rate (several thousand millimeters per second). Thus, the use of the galvano mirror enables the laser pulse to be shone at different positions for each pulse even when the laser pulse is highly repetitive, enabling the altered portions to be arranged at regular intervals. As shown in FIG. 6, the galvano mirror 65 can be used to change the path of the laser pulse, as indicated by an optical axis a, an optical axis b, and an optical axis c. In one example, the laser pulse is diverted to take the optical axis a, b, or c, as described below. The first pulse passes through an off-center portion of the fθ lens and irradiates one end of a glass plate 68, along the optical axis a set by the galvano mirror. The next pulse passes through the center of the fθ lens and irradiates a central portion of the glass plate 68, along the optical axis b. The third pulse is incident on an off-center portion of the fθ lens and irradiates the other end of the glass plate 68, along the optical axis c.

A processing device includes a control unit provided to perform the step (i) of the glass processing method. The control unit includes a memory storing programs and data, and an arithmetic processing unit that performs processes based on the programs and data. The control unit may be realized by a common computer.

Examples

The following will describe the present invention in detail based on examples. In the description below, the etchant concentration is given in mass%.

[Example 1]

The following will describe an example of processing a glass plate made of titanium silicate glass (thickness: 0.3 mm; absorption coefficient at 355 nm: 8 cm$^{-1}$). The percentages of the glass components are shown in Table 2.

[Table 2]

| | | Examples | | | Comparative example 1 |
|---|---|---|---|---|---|
| | | 1, 3, 5 | 2 | 4 | |
| Glass type | | Titanium Silicate | Soda-lime | PYREX | Titanium silicate |
| Components (mol%) | $SiO_2$ | 37.5 | 72.0 | 82.7 | 49.6 |
| | $B_2O_3$ | 12.5 | - | 11.6 | - |
| | $TiO_2$ | 25.0 | - | - | 14.9 |
| | $Al_2O_3$ | - | 0.9 | 1.4 | 19.8 |
| | $Na_2O$ | 25.0 | 12.7 | 3.5 | - |
| | $K_2O$ | - | - | 0.8 | - |
| | MgO | - | 6.0 | - | 14.9 |
| | CaO | - | 8.4 | - | - |
| | $CeO_2$ | - | - | - | 0.8 |
| | Total | 100 | 100 | 100 | 100 |

As the laser, a high repetition pulsed laser (wavelength: 355 nm; repetition frequency: 10 kHz) emitted from a Nd:YAG laser device (210S-UV, LightWave) was used. The laser pulse emitted from the laser device (pulse width: 9 ns; power: 370 mW; beam diameter: 1 mm) was expanded thirty-six times with a beam expander, narrowed by an aperture 14 mm in diameter, and condensed inside the glass plate with an fθ lens having a focal length of 160 mm. The diameter of the beam incident on the lens was 14 mm. The laser beam was condensed at a position away from the top surface of the glass plate by a physical length of 0.15 mm. The laser beam was scanned at 400 mm/s to prevent overlap of the irradiation pulses.

After the irradiation with the laser beam, raised portions having a diameter of about 3 μm and a height of about 1 μm were formed at regular intervals on both the top surface (laser beam incident side) and back surface of the glass plate. Altered portions, distinct from the other portions, were formed in portions of the glass irradiated with the laser beam. Though it is unclear how the glass is altered in these portions, the altered portions were optically distinct from the other portions. By observing the cross section of the altered portions with a light microscope, it was found that the altered portions had the shape of a cylinder with a substantially uniform diameter, and extended from the top surface to the back surface of the glass plate.

Then, the glass plate was polished by 10 μm on the top surface of the glass plate. Polishing was performed using a cerium oxide powder. The polishing made the diameters of the altered portions even more uniform on the top surface side of the glass plate. The polishing step may be omitted, however.

Thereafter, in order to etch only the back surface side in the etching step, the top surface side of the glass plate was protected by applying SILITECT-II (Trylaner International).

The glass plate was then immersed for 10 minutes in 2.3% hydrofluoric acid at room temperature (about 20°C), so as to etch the back surface side of the glass plate. The hydrofluoric acid used in the experiment was prepared by diluting 4.5% hydrofluoric acid (Matsunoen Chemicals Ltd.) with deionized water. Etching was performed with a 38 kHz ultrasonic wave applied to the hydrofluoric acid.

The etching of the altered portions formed tapered truncated conical through-holes having diameters of about 20 μm on the top surface side and about 55 μm on the back surface side. Further, the etching reduced the thickness of the substrate by about 25 μm. The etch amount (thickness etched) of the substrate was measured using a monitor titanium silicate glass that had SILITECT-II applied to part of the surface. Specifically, after etching the monitor glass under the foregoing conditions, SILITECT-II was removed. The etch amount then was found by measuring a step difference between the portion protected by SILITECT-II and the unprotected portion. The etch amount was measured in the same manner in each of the glass plates used in the examples below.

Note that the through-holes were formed in 10 minutes when etching was performed with the ultrasonic wave, whereas it took about 60 minutes to form the through-holes when etching was performed without applying the ultrasonic wave.

[Example 2]

The following will describe an example of processing a glass plate made of soda-lime glass (thickness: 0.41 mm; absorption coefficient at 355 nm: 0.3 $cm^{-1}$). The percentages of the glass components are shown in Table 2.

As the laser, a high repetition pulsed laser (wavelength: 355 nm; repetition frequency: 20 kHz) emitted from a Nd:YAG laser device (Photonics Industries) was used. The laser pulse emitted from the laser device (pulse width: 24 ns; power: 450 mW; beam diameter: 1 mm) was expanded six times with a beam expander, and condensed inside the glass plate with an fθ lens having a focal length of 100 mm. The diameter of the beam incident on the lens was 6 mm. The laser beam was condensed at a position away from the top surface of the glass plate by a physical length of 0.20 mm. The laser beam was scanned at 1000 mm/s to prevent overlap of the irradiation pulses.

By the irradiation with the laser beam, recessed portions having a diameter of about 2 μm were formed at regular intervals on the top surface (laser beam incident side) of the glass plate. Altered portions, distinct from the other portions, were formed in portions of the glass irradiated with the laser beam. The altered portions had the shape of a cylinder with a substantially uniform diameter and a length of about 250 μm. The altered portions did not reach the back surface of the glass plate.

For etching, the glass plate was immersed for 25 minutes in 2.3% hydrofluoric acid at 30°C, while applying a 38 kHz ultrasonic wave. Subsequently, the glass plate was further etched for 10 minutes in 2.3% hydrofluoric acid at room temperature, while applying a 38 kHz ultrasonic wave. The etching reduced the thickness of the glass plate by about 15 μm both on the top surface and back surface of the glass plate. Further, the etching formed conical holes on the top surface side of the glass plate, gradually tapering toward the back surface. The holes had a depth of about 250 μm, and a diameter of about 30 μm on the top surface of the glass plate.

Subsequent to the etching, the glass plate was etched further for 20 minutes in 2.3% hydrofluoric acid at room temperature, by applying a 38 kHz ultrasonic wave. This further reduced the thickness of the substrate by about 5 μm both on the top surface and back surface. The depth of the holes remained the same at about 250 μm. The holes after the etching had a truncated conical shape. The diameter of the holes was about 45 μm on the top surface, and did not show much change along the depth direction.

[Example 3]

The following will describe an example of processing a glass plate made of titanium silicate glass (thickness: 0.3 mm; absorption coefficient at 355 nm: 8 $cm^{-1}$). The fractions of the glass components are shown in Table 2.

As the laser, a high repetition pulsed laser (wavelength: 355 nm; repetition frequency: 20 kHz) emitted from a Nd:YAG laser device (Photonics Industries) was used. The laser pulse emitted from the laser device (pulse width: 24 ns; power: 800 mW; beam diameter: 1 mm) was expanded six times with a beam expander, and condensed inside the glass plate with an fθ lens having a focal length of 100 mm. The diameter of the beam incident on the lens was 6 mm. The laser beam was condensed at a position away from the top surface of the glass plate by a physical length of 0.15 mm. The laser beam was scanned at 1000 mm/s to prevent overlap of the irradiation pulses.

By the irradiation with the laser beam, recessed portions having a diameter of about 9 μm and a depth of about 1 μm were formed at regular intervals on the top surface (laser beam incident side) of the glass. On the back surface, recessed portions having a diameter of about 1 μm were formed. Altered portions, distinct from the other portions, were formed in portions of the glass irradiated with the laser beam. The altered portions had the shape of a cylinder with a substantially uniform diameter, and extended from the top surface to the back surface of the glass plate.

For etching, the glass plate was immersed for 5 minutes in 2.3% hydrofluoric acid at 30°C, while applying a 38 kHz ultrasonic wave. Subsequently, the glass plate was etched further for 15 minutes in 2.3% hydrofluoric acid at room temperature, while applying a 38 kHz ultrasonic wave. The etching reduced the thickness of the glass plate by about 40 μm both on the top surface and back surface of the glass plate. Further, the etching of the altered portions formed hand drum-shaped through-holes having diameters of about 60 μm on the top surface and about 50 μm on the back surface. The diameter was smaller toward the central portion of the glass plate along the direction of thickness. The through-holes were narrowest at a place about 50 μm into the glass plate from the back surface.

[Example 4]

The following will describe an example of processing a glass plate made of PYREX® (thickness: 0.7 mm; absorption coefficient at 355 nm: 0.1 $cm^{-1}$). The percentages of the glass components are shown in Table 2.

As the laser, a high repetition pulsed laser (wavelength: 355 nm; repetition frequency: 20 kHz) emitted from a Nd:YAG laser device (Photonics Industries) was used. The laser pulse emitted from the laser device (pulse width: 24 ns; power: 800 mW; beam diameter: 1 mm) was expanded six times with a beam expander, and condensed inside the glass plate with an fθ lens having a focal length of 100 mm. The diameter of the beam incident on the lens was 6 mm.

The laser beam was condensed at a position away from the top surface of the glass plate by a physical length of 0.35 mm. The laser beam was scanned at 1000 mm/s to prevent overlap of the irradiation pulses.

The irradiation with the laser beam did not produce any observable change on the surface of the glass plate. Altered portions, distinct from the other portions, were formed in the portions irradiated with the laser beam. The altered portions had the shape of a cylinder with a substantially uniform diameter. The altered portions had a length of 200 $\mu$m, spanning the distance from a 200 $\mu$m position inside the glass plate down to a 400 $\mu$m position with respect to the top surface of the glass plate.

After etching, the glass plate was polished by about 210 $\mu$m on the top surface using plate grinding and a cerium oxide powder, so as to expose the altered portions. The altered portions exposed on the surface had a diameter of about 3 $\mu$m. Cracking was observed around the altered portions.

For etching, the glass plate was immersed for 40 minutes in 2.3% hydrofluoric acid at room temperature, while applying a 38 kHz ultrasonic wave. The etching reduced the thickness of the glass plate by about 2 $\mu$m both on the top surface and back surface of the glass plate. Further, the etching of the altered portions formed holes, having a depth of about 200 $\mu$m, on the top surface side of the glass plate. The holes had a diameter of about 30 $\mu$m on the top surface of the glass plate, and tapered toward the bottom of the glass plate. In Example 4, the holes on the surface were star-like in shape, which is attributed to the development of cracking around the holes. This is in contrast to the other examples in which the holes had a circular surface shape.

[Example 5]

The following will describe an example of processing a glass plate made of titanium silicate glass (thickness: 0.3 mm; absorption coefficient at 355 nm: 8 cm$^{-1}$). The percentages of the glass components are shown in Table 2.

As the laser, a high repetition pulsed laser (wavelength: 355 nm; repetition frequency: 10 kHz) emitted from a Nd:YAG laser device (210S-UV, LightWave) was used. The laser pulse emitted from the laser device (pulse width: 9 ns; power: 200 mW; beam diameter: 1mm) was expanded thirty-six times with a beam expander, narrowed by an aperture 14 mm in diameter, and condensed inside the glass plate with an fθ lens having a focal length of 160 mm. The diameter of the beam incident on the lens was 14 mm. The laser beam was condensed at a position away from the top surface of the glass plate by a physical length of 0.15 mm. The laser beam was scanned at 400 mm/s to prevent overlap of the irradiation pulses.

After the irradiation with the laser beam, raised portions having a diameter of about 2 $\mu$m and a height of about 1 $\mu$m were formed at regular intervals on the top surface (laser beam incident side) of the glass plate. Altered portions, distinct from the other portions, were formed in portions of the glass irradiated with the laser beam. The altered portions had the shape of a cylinder with a substantially uniform diameter and a length of about 200 $\mu$m. The altered portions did not reach the back surface.

For etching, the glass plate was immersed for 70 minutes in a 10% aqueous solution of sulfuric acid at room temperature, while applying a 38 kHz ultrasonic wave. The 10% aqueous solution of sulfuric acid used in the experiment was prepared by diluting 95% sulfuric acid aqueous solution (Futaba Chemical Co., Ltd.) with deionized water. The etching reduced the thickness of the glass plate by about 1 $\mu$m both on the top surface and back surface of the glass plate. Further, the etching of the altered portions formed substantially vertical holes having a surface diameter of about 4 $\mu$m and a depth of about 40 $\mu$m. The diameter was substantially uniform along the holes. Subsequent to the etching, the glass plate was etched further for 140 minutes in a 10% sulfuric acid aqueous solution at room temperature, while applying a 38 kHz ultrasonic wave. This further reduced the thickness of the glass plate by about 3 $\mu$m both on the top surface and back surface of the glass plate. Further, the etching of the altered portions formed substantially vertical holes having a surface diameter of about 9 $\mu$m and a depth of about 85 $\mu$m. The diameter was substantially uniform along the holes.

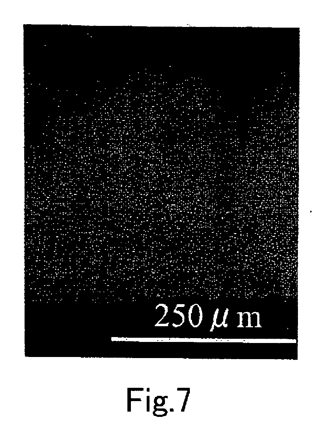

FIG. 7 shows a light micrograph of a glass cross section after the etching. In the micrograph shown in FIG. 7, two vertical holes are formed on the top surface side of the glass plate.

[Comparative Example 1]

The following will describe an example of processing a glass plate made of titanium silicate glass (thickness: 0.57 mm; absorption coefficient at 355 nm: 104 cm$^{-1}$). The percentages of the glass components are shown in Table 2.

As the laser, a high repetition pulsed laser (wavelength: 355 nm; repetition frequency: 20 kHz) emitted from a Nd:YAG laser device (Photonics Industries) was used. The laser pulse emitted from the laser device (pulse width: 24 ns; power: 800 mW; beam diameter: 1 mm) was expanded six times with a beam expander, and condensed inside the glass plate with an fθ lens having a focal length of 100 mm. The diameter of the beam incident on the lens was 6 mm. The laser beam was condensed at a position away from the top surface of the glass plate by a physical length of 0.28 mm. The laser beam was scanned at 1000 mm/s to prevent overlap of the irradiation pulses.

The irradiation with the laser beam formed recessed portions having a diameter of about 11 $\mu$m, equally spaced apart on the top surface of the glass plate. However, the altered portions, as observed in the examples, were not formed.

For etching, the glass plate was immersed for 5 minutes in 2.3% hydrofluoric acid at room temperature, while applying a 38 kHz ultrasonic wave. The etching slightly increased the size of the process marks on the surface but did not produce any other observable changes. In Comparative Example 1, the etching rate of the glass was about 0.5 $\mu$m/min.

[Example 6]

In this example, eight kinds of glass plates, designated as Sample 1 to Sample 8, were processed using a laser pulse having a wavelength of 266 nm. The absorption coefficients of the samples at the wavelength 266 nm are shown in Table 3.

[Table 3]

|  | Sample 1 (quartz) | Sample 2 (silicate) | Sample 3 (NA32) | Sample 4 (SW-YY) |
|---|---|---|---|---|
| Absorption coefficient (cm$^{-1}$) | 0.0 | 5.9 | 8.2 | 9.4 |

(Continued)

|  | Sample 5 (NA35) | Sample 6 (PYREX) | Sample 7 (titanium silicate) | Sample 8 (titanium silicate) |
|---|---|---|---|---|
| Absorption coefficient (cm$^{-1}$) | 10.2 | 46.3 | 57.2 | 280 |

Sample 1 is a quartz glass. The absorption coefficient of Sample 1, determined as above, was 0 (given to the first decimal place). Samples 3 and 5 are glass NA32 and NA35 for display panel, respectively (NH Techno Glass Corporation). Sample 4 is a glass substrate (Asashi Techno Glass Co., Ltd.). Sample 6 is PYREX®. Sample 8 is the titanium silicate glass used in Example 1, whose composition is shown in Table 2. The compositions of Samples 2 and 7 are shown in Table 4.

[Table 4]

| Components | Percentages (mol%) | |
|---|---|---|
|  | Sample 2 (silicate) | Sample 7 (titanium silicate) |
| $SiO_2$ | 67.0 | 67.0 |
| $B_2O_3$ | 8.0 | 8.0 |
| $TiO_2$ | - | 0.5 |
| $Al_2O_3$ | 8.0 | 7.5 |
| $Li_2O$ | 5.0 | 5.0 |
| ZnO | 7.0 | 7.0 |
| MgO | 5.0 | 5.0 |
| Total | 100.0 | 100.0 |

The glass samples 1 to 8 were irradiated with a laser pulse having a wavelength of 266 nm (pulse width: 3.5 ns). In this example, the value of L/D was 25.

The irradiation with the laser pulse formed altered portions in Samples 1 to 6. The altered portions were particularly desirable in Samples 2 and 4. No altered portions were formed in Samples 7 and 8, in which the absorption coefficient at the wavelength 266 nm exceeded 50 cm$^{-1}$.

The glass samples 1 to 6 that formed the altered portions were immersed in 2.3% hydrofluoric acid for 10 to 30 minutes. As a result, pores were formed in all of these samples.

[Example 7]

The method of Example 4 was used to form altered portions and perform etching for glass sample 3 (NA32; absorption coefficient of 0.2 at 355 nm) and glass sample 4 (SW-YY; absorption coefficient of 0.4 at 355 nm) of Example 6, and glass sample 9 (absorption coefficient of 10.9 at 355 nm) having the composition shown in Table 5 below. As a result, pores were formed in all of these samples.

[Table 5]

| Components | Sample 9 Percentages (mol%) |
|---|---|
| $SiO_2$ | 64.1 |
| $Al_2O_3$ | 14.8 |
| $Na_2O$ | 1.9 |
| ZnO | 7.9 |
| MgO | 11.3 |
| Total | 100.0 |

[Example 8]

The titanium silicate glass of Example 1 was irradiated with a laser pulse having a wavelength of 355 nm (pulse width: 24 ns) at varying L/D values. At L/D = 3.8 (L = 40 mm, D = 10.5 mm), no altered portions were formed. At L/D = 8.3 (L = 50 mm, D = 6 mm), altered portions were formed.

[Example 9]

The titanium silicate glass of Example 1 was irradiated with a laser pulse having a wavelength of 355 nm (pulse width: 24 ns) at L/D = 18.5, so as to form altered portions. The glass with the altered portions then was immersed in various etchants. As a result, the altered portions were removed and pores were formed in all of the 10% sulfuric acid aqueous solution, 10% nitric acid aqueous solution, and 10% hydrochloric acid used as etchants. The 10% nitric acid aqueous solution used in the experiment was prepared by diluting a 60% nitric acid aqueous solution (Futaba Chemical Co., Ltd.) with deionized water. The 10% hydrochloric acid was prepared by diluting 35% hydrochloric acid (Futaba Chemical Co., Ltd.) with deionized water.

[Example 10]

The titanium silicate glass of Example 1 was irradiated with a laser pulse having a wavelength of 355 nm (pulse width: 24 ns) at L/D = 18.5, so as to form altered portions. Here, a plurality of pulses was shone adjacent to one another along a line. The irradiation with the laser pulses formed altered portions that were arranged as shown in FIGS. 5A and 5B.

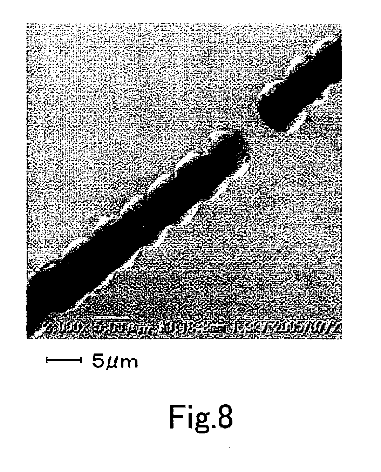

Then, the glass was polished by about 100 $\mu$m on the surface with the altered portions. This was followed by etching, which was performed for 3 hours using a 10% sulfuric acid aqueous solution. The etching formed a groove having a width of about 8 $\mu$m and a depth of about 100 $\mu$m. The depth/width ratio of the groove is 10 or greater. FIG. 8 shows an electron scanning micrograph of the groove taken from the top.

[Example 11]

In this example, a laser pulse was condensed outside the glass to form altered portions.

First, the titanium silicate glass of Example 1 (thickness: 0.3 mm) was irradiated with a high repetition pulsed laser (wavelength: 355 nm; repetition frequency: 25 kHz) emitted from a Nd:YAG laser device (AVIA355, Coherent). Specifically, the laser pulse (pulse width < 30 ns; power: 5W; beam diameter: 3.5 mm) emitted from the laser device was subjected to output adjustment by an attenuator, expanded by a beam expander to increase the beam diameter (3x), passed through an aperture (path diameter of 7 mm) to narrow the beam, and condensed with an fθ lens having a focal length of 100 mm. The diameter of the beam incident on the fθ lens was 7 mm. Through the fθ lens, the laser pulse was condensed outside the glass plate, behind the back surface. Here, the glass plate was positioned such that the laser pulse was condensed outside the glass plate, at a position 0.2 mm from the back surface (far side from the lens). The laser beam was scanned at 3750 mm/s to prevent overlap of the irradiation pulses. The energy of the laser pulse emerging from the fθ lens had a measured value of 60 μJ/pulse.

By the irradiation with the laser beam, recessed portions having a diameter of about 7 μm were formed at regular intervals on the top surface (laser beam incident side) of the glass plate. On the back surface, recessed portions having a diameter of about 3 μm were formed. Altered portions, distinct from the other portions, were formed in portions of the glass irradiated with the laser beam. The altered portions had the shape of a cylinder with a substantially uniform diameter, and extended from the top surface to the back surface of the glass plate.

For etching, the glass plate was immersed for 30 minutes in 0.5% hydrofluoric acid at 30°C, while applying a 38 kHz ultrasonic wave. The 0.5% hydrofluoric acid used in the experiment was prepared by diluting 4.5% hydrofluoric acid (Matsunoen Chemicals Ltd.) with deionized water. The etching reduced the thickness of the glass plate by about 20 μm both on the top surface and back surface of the glass plate. Further, the etching of the altered portions formed through-holes. The through-holes had a diameter of about 50 μm on the top surface and back surface of the glass plate.

Industrial Applicability

A processing method of the present invention makes it possible to form fine holes in various kinds of glass conveniently. A processing method of the invention can be used to form wiring substrates, filters having through·holes for making emulsions, a printer head for ink-jet printers, and alignment jigs for optical fibers, among others.

## Claims

1. A method of processing glass comprising the steps of:

    (i) condensing a laser pulse (11) with a wavelength λ through a lens to irradiate glass (12) and form an altered portion (13) in a portion of the glass irradiated with the laser pulse; and
    (ii) etching the altered portion (13) using an etchant having a greater etching rate for the altered portion than for the glass (12),

    the laser pulse (11) having a pulse width ranging from 1 ns to 200 ns,
    the wavelength λ being 535 nm or less,
    said method being **characterized in that**
    the glass has an absorption coefficient of 50 cm$^{-1}$ or less at the wavelength λ,
    the lens has a focal length L (mm) that produces a value of 7 or greater when divided by a beam diameter D (mm) of the laser pulse incident on the lens, and
    the glass is substantially free from gold and silver, the altered portion (13) is formed by a single irradiation with the laser pulse.

2. The method according to claim 1, wherein the wavelength λ is 360 nm or less.

3. The method according to claim 1 or 2, wherein the laser pulse is a harmonic of a Nd:YAG laser, a Nd:YVO$_4$ laser, or a Nd:YLF laser.

4. The method according to any one of claims 1 to 3, wherein the etchant is an aqueous solution of hydrogen fluoride.

5. The method according to any one of claims 1 to 3, wherein the etchant is an aqueous solution of sulfuric acid, nitric acid, or hydrogen chloride.

6. The method according to any one of claims 1 to 5, wherein, in the step (i), the laser pulse is focused inside the glass, or at a position within a 1.0 mm distance from and behind a back surface of the glass.

**Patentansprüche**

1. Verfahren zur Bearbeitung von Glas, umfassend die Schritte des:

   (i) Verdichtens eines Laserpulses (11) mit einer Wellenlänge $\lambda$ über eine Linse, um Glas (12) zu bestrahlen und einen veränderten Bereich (13) in einem Bereich des Glases auszubilden, der mit dem Laserpuls bestrahlt ist, und
   (ii) Ätzens des veränderten Bereichs (13) unter Verwendung eines Ätzmittels, das für den veränderten Bereich eine größere Ätzgeschwindigkeit besitzt als für das Glas (12),

   wobei der Laserpuls (11) eine Pulsbreite hat, die von 1 ns bis 200 ns reicht,
   wobei die Wellenlänge $\lambda$ 535 nm oder weniger ist,
   wobei das Verfahren **dadurch gekennzeichnet ist, daß**
   das Glas einen Absorptions-Koeffizienten von 50 cm$^{-1}$ oder weniger bei der Wellenlänge $\lambda$ hat,
   die Linse eine fokale Länge L (mm) hat, welche einen Wert von 7 oder mehr ergibt, wenn sie durch einen Strahldurchmesser D (mm) des auf die Linse treffenden Laserpulses geteilt wird, und
   das Glas im wesentlichen frei von Gold und Silber ist,
   der veränderte Bereich (13) durch eine einzige Bestrahlung mit dem Laserpuls ausgebildet ist.

2. Verfahren nach Anspruch 1, wobei die Wellenlänge $\lambda$ 360 nm oder weniger ist.

3. Verfahren nach Anspruch 1 oder 2, wobei der Laserpuls ein harmonischer von einem Nd:YAG Laser, einem Nd:YVO$_4$ Laser oder einem Nd:YLF Laser ist.

4. Verfahren nach einem der Ansprüche 1 bis 3, wobei das Ätzmittel eine wässrige Fluorwasserstofflösung ist.

5. Verfahren nach einem der Anspruche 1 bis 3, wobei das Ätzmittel eine wässrige Lösung von Schwefelsäure, Salpetersäure oder Chlorwasserstoff ist.

6. Verfahren nach einem der Ansprüche 1 bis 5, wobei im Schritt (i) der Laserpuls in dem Glas fokussiert wird oder an einer Position innerhalb eines Abstandes von 1,0 mm vor und hinter einer rückwärtigen Oberfläche des Glases.

**Revendications**

1. Procédé de traitement de verre comprenant les étapes consistant :

   (i) à concentrer une impulsion laser (11) avec une longueur d'onde $\lambda$ à travers une lentille pour irradier du verre (12) et former une portion altérée (13) dans une portion du verre irradié avec l'impulsion laser ; et
   (ii) à décaper la portion altérée (13) en utilisant un décapant présentant une vitesse de décapage supérieure pour la portion altérée que pour le verre (12),

   l'impulsion laser (11) présentant une largeur d'impulsion de 1 ns à 200 ns,
   la longueur d'onde $\lambda$ étant de 535 nm ou inférieure,
   ledit procédé étant **caractérisé en ce que**
   le verre présente un coefficient d'absorption de 50 cm$^{-1}$ ou inférieur à la longueur d'onde $\lambda$,
   la lentille présente une longueur focale L (mm) qui produit une valeur de 7 ou supérieure lorsqu'elle est divisée par un diamètre de faisceau D (mm) de l'impulsion laser incidente sur la lentille, et
   le verre est sensiblement exempt d'or et d'argent,
   la portion altérée (13) est formée par une seule irradiation avec l'impulsion laser.

2. Procédé selon la revendication 1, dans lequel la longueur d'onde $\lambda$ est de 360 nm ou inférieure.

3. Procédé selon la revendication 1 ou 2, dans lequel l'impulsion laser est une harmonique d'un laser Nd:YAG, d'un laser Nd:YVO$_4$ ou d'un laser Nd:YLF.

4. Procédé selon l'une quelconque des revendications 1 à 3, dans lequel le décapant est une solution aqueuse de fluorure d'hydrogène.

5. Procédé selon l'une quelconque des revendications 1 à 3, dans lequel le décapant est une solution aqueuse d'acide sulfurique, d'acide nitrique ou de chlorure d'hydrogène.

6. Procédé selon l'une quelconque des revendications 1 à 5, dans lequel, dans l'étape (i), l'impulsion laser est focalisée à l'intérieur du verre, ou à une position dans une distance de 1,0 mm à partir de et derrière une surface arrière du verre.

Fig.1A

Fig.1B

Fig.2A

11  11  11  11

13  13  13  13

12

Fig.2B

13  13  13  13

12

15

Fig.2C

14  14  14  14

12

15

Fig.2D

14  14  14  14

12

Fig.3A

Fig.3B

Fig.4A

Fig.4B

Fig.4C

13    12

VB          VB

**Fig.5A**

13    13    12

**Fig.5B**

51    12

VD          VD

**Fig.5C**

51    12

**Fig.5D**

**Fig.6**

Fig.7

⊢——⊣ 5μm

Fig.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5374291 A
- JP 2000061667 A
- JP 132001105398 A
- JP 2001105398 A
- JP 2004351494 A
- JP 162004359475 A
- US 20010028385 A